# EUROPEAN PATENT SPECIFICATION

(11) **EP 3 043 539 B1**
(45) Date of publication and mention of the grant of the patent: **05.12.2018**
(21) Application number: 15185748.9
(22) Date of filing: 17.09.2015
(51) Int. Cl.: H04M 1/725, G06F 3/01

(54) **INCOMING CALL PROCESSING METHOD AND MOBILE TERMINAL**
VERFAHREN ZUR VERARBEITUNG VON EINGEHENDEN ANRUFEN UND MOBILES ENDGERÄT
PROCÉDÉ DE TRAITEMENT D'APPELS ENTRANTS ET TERMINAL MOBILE

(30) Priority: 04.01.2015 CN 201510003694
(43) Date of publication of application: 13.07.2016
(73) Proprietor: Huawei Technologies Co., Ltd., Longgang District Shenzhen, Guangdong 518129 (CN)
(72) Inventor: ZHAO, Yin, 518129, P.R. Shenzhen (CN); ZHOU, Jiong, 518129, P.R. Shenzhen (CN); CHEN, Zichong, 518129, P.R. Shenzhen (CN)
(74) Representative: Gill Jennings & Every LLP

(56) References cited:
- EP-A1- 2 752 733
- US-A1- 2012 172 085

## Description

### TECHNICAL FIELD

The present invention relates to the mobile communications field, and in particular, to an incoming call processing method and a mobile terminal.

### BACKGROUND

When a mobile terminal such as a mobile phone that is commonly found in the market receives incoming call information from a caller, an incoming call state is generally maintained until an answering instruction or a rejection instruction entered by a user by using a key or by sliding on a touchscreen is detected, and then an answering operation or a rejection operation is correspondingly executed according to the detected instruction. However, in many cases, the user needs to process an incoming call with one hand, but it is difficult for the user to enter a processing instruction while steadily holding the mobile terminal with one hand. For convenience of processing an incoming call by a user using one hand, a solution in the prior art is that: a distance between a mobile terminal and an object that the mobile terminal directly faces is measured by using a distance sensor on a front face (that is, a face on which a screen is located) of the mobile terminal; when the measured distance is less than a preset threshold, it is considered that the user moves the mobile terminal towards the head of the user, and then the incoming call is answered.

By using the foregoing method, an incoming call can be automatically answered, and a user can also answer a phone call with one hand, but the distance measured by the distance sensor in the foregoing method may not be a distance from the mobile terminal to the head of the user. As a result, the incoming call may be mistakenly answered due to misreading of an action of the user; in addition, the foregoing method can only be used to automatically answer an incoming call but cannot be used to automatically reject an incoming call.

EP2752733 relates to apparatus and method for providing control service using head tracking technology in an electronic device.

### SUMMARY

Embodiments of the present invention provide an incoming call processing method and a mobile terminal, which can be used to automatically process an incoming call according to a change in a distance between the mobile terminal and a human face, thereby improving accuracy of incoming call processing.

In particular, the present disclosure provides an incoming call processing method according to claim 1 and a mobile terminal according to claim 2.

In the embodiments of the present invention, when a signal for an incoming call is received, an image may be acquired by using a preset shooting apparatus; each time after an image is acquired, human face detection may be performed on the acquired image, and a variation of a distance between a mobile terminal and a detected human face may be determined; and corresponding incoming call processing may be performed according to the variation of the distance. According to the incoming call processing method, processing such as answering or rejecting an incoming call may be automatically performed when a human face is detected, and an instruction of a user may be accurately analyzed according to a change in a distance between a mobile terminal and the human face, and corresponding processing may be performed, thereby reducing a probability of mistakenly answering an incoming call and improving accuracy of incoming call processing. In addition, according to the method, the incoming call may further be rejected according to the change in the distance between the mobile terminal and the human face, so that incoming call processing manners are more diverse.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a schematic flowchart of an embodiment of an incoming call processing method according to an embodiment of the present invention;
FIG. 2 is a schematic flowchart of another embodiment of an incoming call processing method according to an embodiment of the present invention;
FIG. 3 is a schematic flowchart of still another embodiment of an incoming call processing method according to an embodiment of the present invention;
FIG. 4 is a schematic flowchart of still another embodiment of an incoming call processing method according to an embodiment of the present invention;
FIG. 5 is a schematic flowchart of still another embodiment of an incoming call processing method according to an embodiment of the present invention;
FIG. 6 is a schematic structural diagram of an embodiment of a mobile terminal according to an embodiment of the present invention;
FIG. 7 is a schematic structural diagram of another embodiment of a mobile terminal according to an embodiment of the present invention;
FIG. 8 is a schematic structural diagram of an embodiment of an incoming call processing unit of a mobile terminal according to an embodiment of the present invention;
FIG. 9 is a schematic structural diagram of an embodiment of a distance determining unit of a mobile terminal according to an embodiment of the present invention;
FIG. 10 is a schematic structural diagram of another embodiment of a distance determining unit of a mobile terminal according to an embodiment of the present invention;
FIG. 11 is a schematic structural diagram of still another embodiment of a distance determining unit of a mobile terminal according to an embodiment of the present invention;
FIG. 12 is a schematic structural diagram of still another embodiment of a distance determining unit of a mobile terminal according to an embodiment of the present invention; and
FIG. 13 is a schematic structural diagram of still another embodiment of a mobile terminal according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The embodiments of the present invention provide an incoming call processing method and a mobile terminal, which can be used to automatically process an incoming call according to a change in a distance between the mobile terminal and a human face, thereby improving accuracy of incoming call processing. The following describes the embodiments of the present invention with reference to the accompanying drawings.

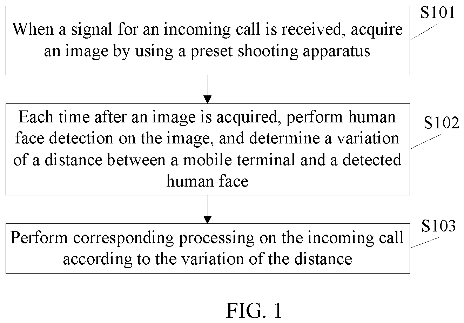

Referring to FIG. 1, FIG. 1 is a schematic flowchart of an embodiment of an incoming call processing method according to an embodiment of the present invention. As shown in FIG. 1, the incoming call processing method may include the following steps:
S101. When a signal for an incoming call is received, acquire an image by using a preset shooting apparatus.

Optionally, the preset shooting apparatus may be a visible light camera, or a camera capturing a non-visible light spectrum, for example, an infrared camera, or may be a front-facing camera or a rear-facing camera of a mobile terminal, where front-facing indicates being located at a front face, which is generally a surface on which a screen is located, of the mobile terminal, and rear-facing indicates being located at a back face, which is generally a surface opposite to the screen, of the mobile terminal. Considering that a user needs to check caller identification display on the screen before answering or rejecting an incoming call, preferably, the preset shooting apparatus may be the front-facing camera of the mobile terminal, for example, a monocular camera or a binocular camera above the screen of the mobile terminal.

When a signal for an incoming call from a caller is received, the mobile terminal stays in an incoming call state, and in the incoming call state, the mobile terminal may acquire, at a time interval by using the preset shooting apparatus, an image within a field of view of the shooting apparatus, where the time interval for acquiring images may be preset or may be correspondingly set according to a motion speed of the mobile terminal. For example, a user generally needs Is or 2s to move the mobile terminal to an ear to answer an incoming call. In order to acquire enough images within this period of time, a fixed time interval for acquiring images may be set to less than Is, for example, 20 ms to 100 ms; or, after the first image is acquired, time required for the mobile terminal to move to the user's ear may be obtained by means of estimation according to a movement speed of the mobile terminal, and then a time interval for acquiring images may be determined according to the estimated time. A time interval for acquiring every two images may be different.

S102. Each time after an image is acquired, perform human face detection on the image, and determine a variation of a distance between a mobile terminal and a detected human face.

Optionally, the performing human face detection on the image includes detecting a facial contour, a skin color feature, features of five sense organs, and/or the like in the image. During specific implementation, a common method for human face detection, such as a method based on a skin color feature, a method based on a gray-scale feature, and/or a method based on a heuristics model may be used. For these methods, reference may be made to related materials, for example, the following theses: A Survey of Human Face Detection that is written by Liang Luhong, Ai Haizhou, and the like and published on Issue 5, 2002 of the Chinese Journal of Computers*,* and/or Face Detection: A Survey that is written by Erik Hjelmas and Boon Kee Low and published on Volume 83, 2001 of the Computer Vision and Image Understanding*,* and details are not described herein again.

After human face detection is performed on the image, if a human face is detected in the image, a distance between the mobile terminal and the detected human face is calculated. Optionally, if the preset shooting apparatus is a monocular camera, each time after an image is acquired, a mean distance of a distance between at least one pair of facial features in the image may be calculated. Starting from the second acquired image, a mean distance of a distance between at least one pair of facial features in the image acquired at a current moment is compared with a mean distance of a distance between at least one pair of facial features in an image acquired at an earlier moment, and a variation, from the earlier moment to the current moment, of the distance between the mobile terminal and the human face is calculated. Alternatively, if the preset shooting apparatus is a binocular camera, each time after a binocular image is acquired, a mean disparity value of at least two target points or at least two facial features in a facial area in a binocular image acquired at a current moment may be calculated, where the at least two facial features can match each other; and a variation, from an earlier moment to the current moment, of the distance between the mobile terminal and the human face is obtained by means of calculation according to a variation between the mean disparity value at the current moment and a mean disparity value at the earlier moment. Alternatively, if the preset shooting apparatus is a binocular camera, each time after a binocular image is acquired, a variation, from an earlier moment to a current moment, of a mean distance of a distance between at least one pair of facial features in one image (for example, right view) of the binocular image may be calculated; a variation, from the earlier moment to the current moment, of a mean disparity value of at least two target points or at least two facial features in a facial area may be calculated, where the at least two facial features can match each other; and a variation of the distance between the mobile terminal and the human face may be calculated according to the two variations. Alternatively, in some embodiments, if a human face is detected in the image, it may be known that the preset shooting apparatus faces towards the human face. In this case, a distance between the mobile terminal and an object in front of the mobile terminal may be measured by using a distance measuring apparatus in or next to the shooting apparatus, and a variation of the distance is a variation of the distance between the mobile terminal and the detected human face. Optionally, the distance measuring apparatus may be an ultrasonic distance measuring apparatus, an infrared distance measuring apparatus, or the like. In some embodiments, the earlier moment may be any moment, before the current moment, at which an image is acquired, for example, may be a moment, before the current moment, at which the N^{th} image is acquired, where N is a positive integer greater than or equal to 1, for example, N = 1 or N = 2.

S103. Perform corresponding processing on the incoming call according to the variation of the distance.

Optionally, processing performed on the incoming call may include: connecting the incoming call, rejecting the incoming call, or holding the incoming call. Specifically, performing corresponding processing on the incoming call according to the variation of the distance between the mobile terminal and the human face may include at least one of the following:
(1) if a decrease in the distance between the mobile terminal and the human face reaches a first threshold within a period of time, connecting the incoming call;
(2) if an increase in the distance between the mobile terminal and the human face reaches a second threshold within a period of time, rejecting the incoming call; and
(3) if a decrease in the distance between the mobile terminal and the human face is less than the first threshold or an increase in the distance between the mobile terminal and the human face is less than the second threshold within a period of time, maintaining an incoming call state.

In this embodiment of the present invention, both the first threshold and the second threshold are greater than zero. If the distance between the mobile terminal and the human face decreases within a period of time, and a decrease reaches the first threshold, it may be determined that the mobile terminal apparently approaches the human face; in this case, generally, an action of a user is moving the mobile terminal to the user's ear for answering the incoming call, and then the incoming call may be connected. If the distance between the mobile terminal and the human face increases within a period of time, and an increase reaches the second threshold, it may be determined that the mobile terminal apparently moves in a direction far away from the human face; in this case, generally, an action of a user is moving away the mobile terminal that is picked up, with no desire to answer the incoming call, and then the incoming call may be rejected. If the variation of the distance between the mobile terminal and the human face, within a period of time, is in a range formed by the first threshold and the second threshold, it indicates that relative motion of the mobile terminal and the human face is inapparent; in this case, generally, an action of a user is checking caller identification display or hesitating whether to answer the incoming call, and then an incoming call state may be maintained. Specifically, the period of time may be a period of time between a current moment and a moment, before the current moment, at which the I^{th} image is acquired, where I is an integer greater than or equal to 1.

According to the incoming call processing method shown in FIG. 1, when a signal for an incoming call is received, an image may be acquired by using a preset shooting apparatus at a time interval; each time after an image is acquired, human face detection may be performed on the acquired image, and a variation of a distance between a mobile terminal and a detected human face may be determined; and corresponding incoming call processing may be performed according to the variation of the distance. According to the incoming call processing method, processing such as answering or rejecting an incoming call may be automatically performed when a human face is detected, and an instruction of a user may be accurately analyzed according to a variation of a distance between a mobile terminal and the human face, and corresponding processing may be performed, thereby reducing a probability of mistakenly answering an incoming call and improving accuracy of incoming call processing. In addition, according to the method, the incoming call may further be rejected according to a change in the distance between the mobile terminal and the human face, so that incoming call processing manners are more diverse.

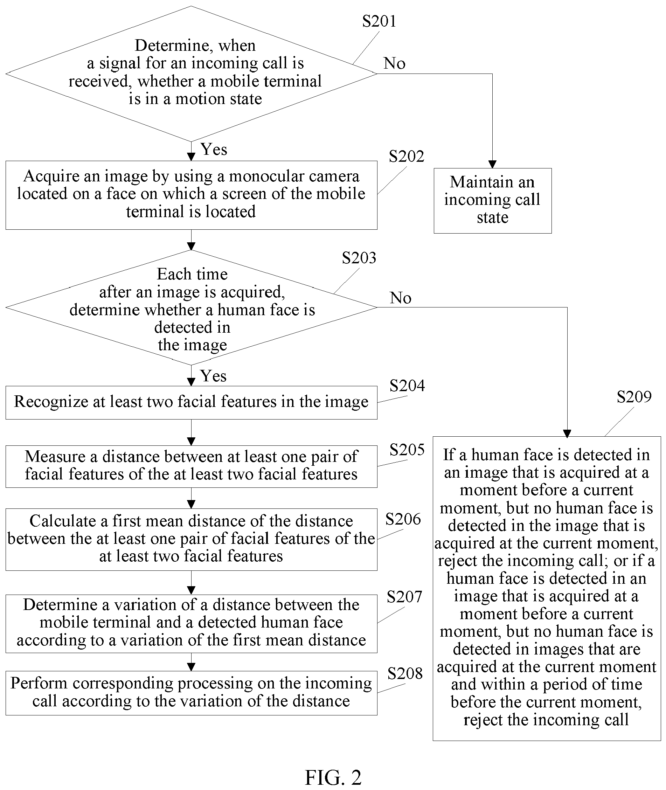

Referring to FIG. 2, FIG. 2 is a schematic flowchart of an embodiment of an incoming call processing method according to an embodiment of the present invention. As shown in FIG. 2, the incoming call processing method may include the following steps:
S201. Determine, when a signal for an incoming call is received, whether a mobile terminal is in a motion state; if the mobile terminal is in a motion state, go to S202; if the mobile terminal is not in a motion state, maintain an incoming call state.

During specific implementation, when the signal for the incoming call is received, whether the mobile terminal is in a motion state may be first determined. Optionally, whether the mobile terminal is in a motion state may be determined by means of analyzing a change in an input signal or an output signal from an apparatus such as a speed sensor, an acceleration sensor, a gyroscope, or a direction sensor inside the mobile terminal. For example, a movement speed of the mobile terminal may be detected by using a speed sensor, and therefore, whether the mobile terminal is in a motion state may be determined; deflection or tilting motion of the mobile terminal may be detected by using a gyroscope.

In some feasible implementation manners, if the mobile terminal is not in a motion state, that is, an instruction entered by a user is not detected, it is difficult to determine whether the user perceives the incoming call or whether the user intends to connect the incoming call; then, the incoming call state may be maintained, to wait for the user to enter the instruction.

S202. Acquire an image by using a monocular camera located on a face on which a screen of the mobile terminal is located.

In some feasible implementation manners, a preset shooting apparatus may be a front-facing monocular camera of the mobile terminal, that is, the monocular camera located on the face on which the screen of the mobile terminal is located. Specifically, the monocular camera is a camera having one camera lens. At a moment, the monocular camera acquires one image from a specific angle.

Specifically, a time interval for acquiring images may be correspondingly set according to a motion speed of the mobile terminal. For example, a user generally needs Is or 2s to move the mobile terminal to an ear to answer an incoming call. In order to acquire enough images within this period of time, a fixed time interval for acquiring images may be set to less than Is, for example, 10 ms to 50 ms; or, after the first image is acquired, time required for the terminal to move to the user's ear may be obtained by means of estimation according to a speed at which the mobile terminal is moved, and then a time interval for acquiring images may be determined according to the estimated time.

S203. Each time after an image is acquired, determine whether a human face is detected in the image; if a human face is detected in the image, go to S204; if no human face is detected in the image, go to S209.

In some feasible implementation manners, each time after an image is acquired, whether a facial area exists in the image may be roughly determined first. Optionally, whether there is a facial contour and a skin color feature in the image may be first detected, so as to preliminarily determine whether there is a human face in the image.

In some feasible implementation manners, if a human face is detected in the image, a first identifier may be displayed on the screen, so as to remind the user that the human face has been detected at this moment; if no human face is detected in the image, a second identifier may be displayed or no first identifier may be displayed, so as to remind the user that no human face is detected at this moment.

S204. Recognize at least two facial features in the image.

If a human face is detected in the image acquired by the monocular camera, at least two facial features in the image may be further recognized, so that locations of the at least two facial features are determined. The facial features may include features of five sense organs such as a left eye, a right eye, a left eyebrow, a right eyebrow, a nose, and a mouth. Optionally, a model of the five sense organs may be pre-established, and the foregoing features of the five sense organs may be detected separately based on the model; for example, dual matching of luminance and chromaticity may be performed separately on the foregoing features of the five sense organs, so as to determine whether the foregoing features of the five sense organs exist in the image and to determine locations of the foregoing features of the five sense organs. Optionally, some facial feature points, for example, texture features of non-flat areas such as the five sense organs, the eyebrows, teeth, nevus, and wrinkles, may further be extracted by using a local-feature detection operator such as an Scale-Invariant Feature Transform (SIFT) algorithm and an Speeded Up Robust Features (SURF) algorithm.

S205. Measure a distance between at least one pair of facial features of the at least two facial features.

After the at least two facial features are recognized, the recognized features may be paired, and a distance between the at least one pair of facial features is measured separately. Optionally, if only two facial features are recognized, a distance between the two facial features is calculated. If more than two facial features are recognized, in some feasible implementation manners, each facial feature may be paired with another facial feature one by one, and a distance between each pair of facial features is calculated. For example, if a left eye, a right eye, and a nose are recognized, a distance between the left eye and the right eye, a distance between the left eye and the nose, and a distance between the right eye and the nose are calculated. In some other feasible implementation manners, each facial feature may be paired with another facial feature relatively close to the facial feature, and then a distance between each pair of facial features is calculated. For example, if a left eye, a right eye, and a nose are recognized, the nose is paired with the left eye and the right eye separately, and a distance between the nose and the left eye and a distance between the nose and the right eye are calculated.

In some feasible implementation manners, the distance between the foregoing at least one pair of facial features is a distance in the image, and the foregoing distance may be measured in a unit of pixel, cm, inch, or the like.

S206. Calculate a first mean distance of the distance between the at least one pair of facial features of the at least two facial features.

After the distance between the at least one pair of facial features is measured, a mean, that is, the first mean distance, of the distance between the at least one pair of facial features is calculated.

Optionally, the first mean distance may be a weighted mean, a median value, or a geometric mean of the distance between the at least one pair of facial features. If the first mean distance is a weighted mean, a same weight may be used for a distance between each pair of facial features; or, a relatively large weight is used for a distance between a pair of facial features that are located closer to each other, for example, a larger weight is used for a distance between a left eye and a nose, and a smaller weight is used for a distance between the left eye and a mouth.

S207. Determine a variation of a distance between the mobile terminal and a detected human face according to a variation of the first mean distance.

Specifically, starting from the second acquired image, each time after an image is acquired, a first mean distance of the image acquired at a current moment is compared with a first mean distance of an image acquired at a previous moment. If the first mean distance increases, it indicates that the distance between the mobile terminal and the detected human face decreases; if the first mean distance decreases, it indicates that the distance between the mobile terminal and the detected human face increases. For example, when an increase in the first mean distance is greater than a third threshold, a decrease in the distance between the mobile terminal and the detected human face is greater than a first threshold; when a decrease in the first mean distance is greater than a fourth threshold, an increase in the distance between the mobile terminal and the detected human face is greater than a second threshold.

Optionally, when the mobile terminal is in an incoming call state, a slider bar used for indicating the distance between the mobile terminal and the detected human face may be displayed on a screen of a mobile phone, and a location of a slider point on the slider bar may be adjusted according to the variation of the distance between the mobile terminal and the detected human face. Specifically, if it is detected that the distance between the mobile terminal and the detected human face decreases, the slider point on the slider bar moves in a direction; if it is detected that the distance between the mobile terminal and the detected human face increases, the slider point on the slider bar moves in an opposite direction. For example, the slider bar is a horizontal slider bar, there is an identifier for rejecting a call at a left end of the slider bar, there is an identifier for connecting a call at a right end of the slider bar, and there is a rounded slider point on the slider bar; if it is detected that the distance between the mobile terminal and the detected human face decreases, the slider point on the slider bar moves rightwards; if it is detected that the distance between the mobile terminal and the detected human face increases, the slider point on the slider bar moves leftwards.

S208. Perform corresponding processing on the incoming call according to the variation of the distance.

Optionally, processing performed on the incoming call may include: connecting the incoming call, rejecting the incoming call, or holding the incoming call. Specifically, performing corresponding processing on the incoming call according to the variation of the distance between the mobile terminal and the human face may include at least one of the following:
(1) if a decrease in the distance between the mobile terminal and the human face reaches a first threshold within a period of time, connecting the incoming call;
(2) if an increase in the distance between the mobile terminal and the human face reaches a second threshold within a period of time, rejecting the incoming call; and
(3) if a decrease in the distance between the mobile terminal and the human face is less than the first threshold or an increase in the distance between the mobile terminal and the human face is less than the second threshold within a period of time, maintaining an incoming call state.

In this embodiment of the present invention, both the first threshold and the second threshold are greater than zero. If the distance between the mobile terminal and the human face decreases within a period of time, and a decrease reaches the first threshold, it may be determined that the mobile terminal apparently approaches the human face; in this case, generally, an action of a user is moving the mobile terminal to the user's ear for answering the incoming call, and then the incoming call may be connected. If the distance between the mobile terminal and the human face increases within a period of time, and an increase reaches the second threshold, it may be determined that the mobile terminal apparently moves in a direction far away from the human face; in this case, generally, an action of a user is moving away the mobile terminal that is picked up, with no desire to answer the incoming call, and then the incoming call may be rejected. If the variation of the distance between the mobile terminal and the human face, within a period of time, is in a range formed by the first threshold and the second threshold, it indicates that relative motion of the mobile terminal and the human face is inapparent; in this case, generally, an action of a user is checking caller identification display or hesitating whether to answer the incoming call, and then an incoming call state may be maintained. Specifically, the period of time may be a period of time between a current moment and a moment, before the current moment, at which the I^{th} image is acquired, where I is an integer greater than or equal to 1.

Optionally, if a processing result of the incoming call is holding the incoming call, S202 may be returned to.

S209. If a human face is detected in an image that is acquired at a moment before a current moment, but no human face is detected in the image that is acquired at the current moment, reject the incoming call; or if a human face is detected in an image that is acquired at a moment before a current moment, but no human face is detected in images that are acquired at the current moment and within a period of time before the current moment, reject the incoming call.

Specifically, the moment before the current moment refers to any moment, before the current moment, at which an image is acquired. The period of time before the current time may be a preset period of time, for example, a period of time between 0.2 second before the current time and the current time; or may be a period of time between a moment, before the current moment, at which the M^{th} image is acquired and the current time, where M is a positive integer greater than or equal to 1, for example, M = 1 or M = 3.

If the human face is detected in the image that is acquired at the moment before the current moment, but no human face is detected in the image that is acquired at the current moment, or the human face is detected in the image that is acquired at the moment before the current moment, but no human face is detected in the images that are acquired at the current moment and within the period of time before the current moment, it indicates that the user may have seen the incoming call but move the mobile terminal away; in this case, it may be determined that the user has no desire to answer the incoming call and rejects the incoming call.

In some feasible implementation manners, if no human face is detected all along, or a human face is occasionally detected, the incoming call state may be maintained, and S202 is returned to.

According to the incoming call processing method shown in FIG. 2, when a signal for an incoming call is received, an image may be acquired by using a front-facing monocular camera of a mobile terminal; each time after an image is acquired, human face detection may be performed on the acquired image, and a variation of a distance between the mobile terminal and a human face may be determined according to a variation of a mean of a distance between facial features in the acquired image; and corresponding incoming call processing may be performed according to the variation of the distance. Further, an instruction of a user may be interpreted according to the detection of the existence of face within the image, so as to decide whether to reject the incoming call. According to the incoming call processing method, processing such as answering or rejecting an incoming call may be automatically performed when a human face is detected, and an instruction of a user may be accurately analyzed according to a distance between a mobile terminal and the human face, and corresponding processing may be performed, thereby reducing a probability of mistakenly answering an incoming call and improving accuracy of incoming call processing. In addition, according to the method, the incoming call may further be rejected according to a change in the distance between the mobile terminal and the human face, or whether to hold the incoming call may further be decided according to whether the mobile terminal moves, so that incoming call processing manners are more diverse.

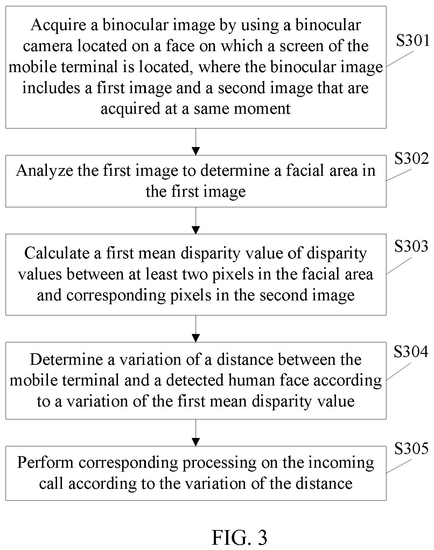

Referring to FIG. 3, FIG. 3 is a schematic flowchart of an embodiment of an incoming call processing method according to an embodiment of the present invention. As shown in FIG. 3, the incoming call processing method may include the following steps:
S301. Acquire a binocular image by using a binocular camera located on a face on which a screen of a mobile terminal is located, where the binocular image includes a first image and a second image acquired at a same moment.

In some feasible implementation manners, a preset shooting apparatus may be a front-facing binocular camera of the mobile terminal, that is, the binocular camera located on the face on which the screen of the mobile terminal is located. Optionally, the binocular camera includes two camera lenses, where the two camera lenses may be arranged horizontally, vertically, or diagonally. Specifically, when a shape of the screen of the mobile terminal is a rectangle, a line connecting optical centers of the two camera lenses may be parallel or perpendicular to an upper edge of the screen, or form an included angle less than 90 degrees with the upper edge of the screen. At a moment, the binocular camera may acquire an image from each of two different angles by using the foregoing two camera lenses, namely, the first image and the second image. In this embodiment, the first image and the second image are collectively called the binocular image.

Specifically, a time interval for acquiring binocular images may be correspondingly set according to a motion speed of the mobile terminal. For example, a user generally needs Is or 2s to move the mobile terminal to an ear to answer an incoming call. In order to acquire enough images within this period of time, a fixed time interval for acquiring binocular images may be set to less than Is, for example, 25 ms to 50 ms; or, after the first image is acquired, time required for the mobile terminal to move to the user's ear may be obtained by means of estimation according to a movement speed of the mobile terminal, and then a time interval for acquiring binocular images may be determined according to the estimated time. A time interval for acquiring every two images may be different.

S302. Analyze the first image to determine a facial area in the first image.

During specific implementation, if a human face is detected in the binocular image, the facial area may be first determined in one of the binocular image. Optionally, the facial area may be a rectangular area including the human face, or may be an area formed by a facial contour.

In some feasible implementation manners, if a human face is detected in the image, a first identifier may be displayed on the screen, so as to remind the user that the human face has been detected at this moment; if no human face is detected in the image, a second identifier may be displayed or no first identifier may be displayed, so as to remind the user that no human face is detected at this moment.

S303. Calculate a first mean disparity value of disparity values between at least two pixels in the facial area and corresponding pixels in the second image.

In this embodiment of the present invention, a same target point forms images separately by using the two camera lenses of the binocular camera, where a location, in the first image, of an image of the target point is different from that in the second image, and a difference of coordinates, in the first image and the second image, of the images of the target point is a disparity value of the images of the target point. Generally, the first image and the second image should use a same origin of coordinates and same coordinate axes. For example, both the first image and the second image use their top left corners as the origin of coordinates, use a rightward horizontal direction as a positive direction of an abscissa axis, and use a downward vertical direction as a positive direction of an ordinate axis. Optionally, the disparity value may be measured in a unit of pixel.

Optionally, when the two camera lenses of the binocular camera are horizontally arranged, a difference of abscissas, in the first image and the second image, of the images of the target point may be used as a disparity value of the target point in the binocular image simply; when the two camera lenses of the binocular camera are vertically arranged, a difference of ordinates, in the first image and the second image, of the images of the target point may be used as a disparity value of the target point in the binocular image simply.

Specifically, after the facial area in the first image is determined, at least two pixels may be selected from the facial area in the first image, and corresponding pixels matching the at least two pixels are found in the second image. For example, imaging pixels of two corners of a left eye are selected from the facial area in the first image, and then the second image is searched for imaging pixels of the two corners of the left eye, which are used as corresponding matched pixels. After the at least two pixels in the first image and the corresponding pixels, in the second image, of the at least two pixels are determined, a disparity value between each pixel and a pixel corresponding to the pixel is calculated, and a weighted mean, a median value, or a geometric mean of these disparity values may be taken and be used as the first mean disparity value.

S304. Determine a variation of a distance between the mobile terminal and a detected human face according to a variation of the first mean disparity value.

Specifically, starting from the second acquired binocular image, each time after a binocular image is acquired, a first mean disparity value of the binocular image acquired at a current moment is compared with a first mean disparity value of a binocular image acquired at a previous moment. If the first mean disparity value increases, it indicates that the distance between the mobile terminal and the detected human face decreases; if the first mean disparity value decreases, it indicates that the distance between the mobile terminal and the detected human face increases. For example, when an increase in the first mean disparity value is greater than a fifth threshold, a decrease in the distance between the mobile terminal and the detected human face is greater than a first threshold; when a decrease in the first mean disparity value is greater than a sixth threshold, an increase in the distance between the mobile terminal and the detected human face is greater than a second threshold.

Optionally, when the mobile terminal is in an incoming call state, a slider bar used for indicating the distance between the mobile terminal and the detected human face may be displayed on a screen of a mobile phone, and a location of a slider point on the slider bar may be adjusted according to the variation of the distance between the mobile terminal and the detected human face. Specifically, if it is detected that the distance between the mobile terminal and the detected human face decreases, the slider point on the slider bar moves in a direction; if it is detected that the distance between the mobile terminal and the detected human face increases, the slider point on the slider bar moves in an opposite direction. For example, the slider bar is a horizontal slider bar, there is an identifier for rejecting a call at a left end of the slider bar, there is an identifier for connecting a call at a right end of the slider bar, and there is a rounded slider point on the slider bar; if it is detected that the distance between the mobile terminal and the detected human face decreases, the slider point on the slider bar moves rightwards; if it is detected that the distance between the mobile terminal and the detected human face increases, the slider point on the slider bar moves leftwards.

S305. Perform corresponding processing on an incoming call according to the variation of the distance.

In this embodiment of the present invention, for a specific implementation manner of step S305, reference may be made to step S208 in the embodiment shown in FIG. 2, and details are not described herein again.

Optionally, if a processing result of the incoming call is maintaining an incoming call state, S301 may be returned to.

According to the incoming call processing method shown in FIG. 3, when a signal for an incoming call is received, an image may be acquired by using a front-facing binocular camera of a mobile terminal; each time after an image is acquired, human face detection may be performed on the acquired image, and a variation of a distance between the mobile terminal and a human face may be determined according to a variation of a mean disparity value of at least two pixels in the acquired image; and corresponding incoming call processing may be performed according to the variation of the distance. Further, an instruction of a user may be interpreted according to the detection of the existence of face within the image, so as to decide whether to reject the incoming call. According to the incoming call processing method, processing such as answering or rejecting an incoming call may be automatically performed when a human face is detected, and an instruction of a user may be accurately analyzed according to a distance between a mobile terminal and the human face, and corresponding processing may be performed, thereby reducing a probability of mistakenly answering an incoming call and improving accuracy of incoming call processing. In addition, according to the method, the incoming call may further be rejected according to a change in the distance between the mobile terminal and the human face, so that incoming call processing manners are more diverse.

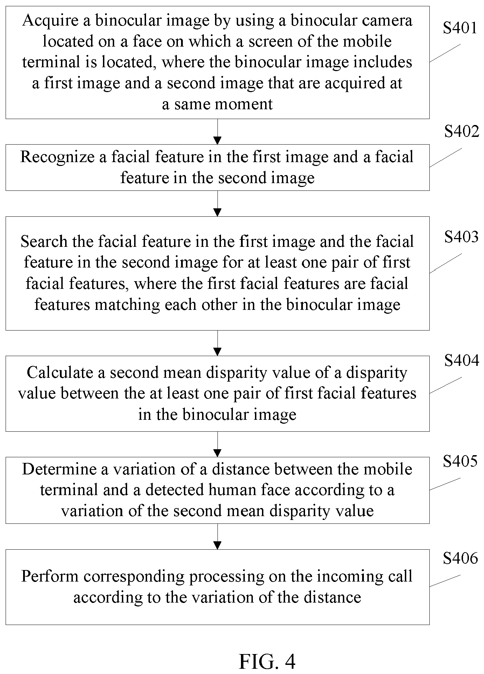

Referring to FIG. 4, FIG. 4 is a schematic flowchart of still another embodiment of an incoming call processing method according to an embodiment of the present invention. As shown in FIG. 4, the incoming call processing method may include the following steps:
S401. Acquire a binocular image by using a binocular camera located on a face on which a screen of the mobile terminal is located, where the binocular image includes a first image and a second image acquired at a same moment.

In this embodiment of the present invention, for a specific implementation manner of step S401, reference may be made to step S301 in the embodiment shown in FIG. 3, and details are not described herein again.

S402. Recognize a facial feature in the first image and a facial feature in the second image.

In this embodiment of the present invention, facial features may include features of five sense organs such as a left eye, a right eye, a left eyebrow, a right eyebrow, a nose, and a mouth. Optionally, a model of the five sense organs may be pre-established, and the foregoing features of the five sense organs may be detected separately based on the model; for example, dual matching of luminance and chromaticity may be performed separately on the foregoing features of the five sense organs, so as to determine whether the foregoing features of the five sense organs exist in the image and to determine locations of the foregoing features of the five sense organs. Optionally, some facial feature points, for example, texture features of non-flat areas such as the five sense organs, the eyebrows, teeth, nevus, and wrinkles, may further be extracted by using a local-feature detection operator such as an SIFT algorithm and an SURF algorithm.

During specific implementation, after the facial features are recognized, the facial features may be marked. For example, the facial features are marked with a "left eye", a "right eye", a "left eyebrow", a "right eyebrow", a "mouth", a "nose", a "nevus", a "wrinkle", and the like. Locations of the recognized facial features in the images may further be determined. Optionally, a location of a recognized facial feature may be marked by using coordinates of a pixel in the facial feature, for example, marked by using coordinates of a central point.

In some feasible implementation manners, human face detection may be first performed on the first image, to recognize a facial feature in the first image; then detection may be performed on the second image according to the recognized facial feature in the first image, and a facial feature matching the facial feature in the first image may be found in the second image.

In some other feasible implementation manners, human face detection may be performed separately on the first image and the second image, so as to separately recognize a facial feature in the first image and a facial feature in the second image.

S403. Search the facial feature in the first image and the facial feature in the second image for at least one pair of first facial features, where the first facial features are facial features matching each other in the binocular image.

Correspondingly, in step S402, if a facial feature in the first image is first recognized, detection is then performed on the second image according to the facial feature in the first image, and a facial feature matching the facial feature in the first image is found in the second image, the facial feature found in the second image and the facial feature, corresponding to the facial feature in the second image, in the first image are the first facial features. During specific implementation, when a difference between feature values of a feature in the first image and a feature in the second image is less than a preset difference threshold, it is considered that the two features match each other, where the difference between the feature values may include but be not limited to a difference between SIFT feature values and a difference between SURF feature values.

Optionally, after a facial feature F1 in the first image is recognized, a specific area in the second image may be searched for a facial feature F2 matching the feature F1. The specific area may be a circular area or a rectangular area in which coordinates of a central point are the same as coordinates of the facial feature F1, or may be the entire second image. If one feature F2 is found in the second image, the feature F2 and the feature F1 are a pair of first facial features; if multiple features F2 are found in the second image, the feature F1 and a feature F2 whose feature value is closest to the feature value of the feature F1 are a pair of first facial features.

Correspondingly, in step S402, if human face detection is performed separately on the first image and the second image, and a facial feature in the first image and a facial feature in the second image are separately recognized, the facial feature in the first image may be compared with the facial feature in the second image, and facial features that can match each other are the first facial features.

Optionally, if a facial feature recognized in the first image and a facial feature recognized in the second image are separately marked, facial features that are marked the same in the first image and the second image are a pair of first facial features. For example, the feature recognized in the first image includes a feature F3, the feature F3 is marked as a "left eye", the feature recognized in the second image includes a feature F4, and the feature F4 is also marked as a "left eye"; then it is determined that the feature F3 and the feature F4 match each other, and the feature F3 in the first image and the feature F4 in the second image are a pair of first facial features.

S404. Calculate a second mean disparity value of a disparity value between the at least one pair of first facial features in the binocular image.

After the at least one pair of first facial features is found, a disparity value between each pair of first facial features, that is, a difference of coordinates, in the first image and the second image, of each pair of first facial features, is calculated. Optionally, when two camera lenses of the binocular camera are horizontally arranged, a difference of abscissas of one pair of first facial features separately in the first image and the second image may be used as a disparity value between the pair of first facial features in the binocular image simply; when the two camera lenses of the binocular camera are vertically arranged, a difference of ordinates of one pair of first facial features separately in the first image and the second image may be used as a disparity value between the pair of first facial features in the binocular image simply.

Optionally, if one pair of first facial features is found, the second mean disparity value is a disparity value between the pair of first facial features; if multiple pairs of first facial features are found, the second mean disparity value may be a weighted mean, a geometric mean, or a median value of disparity values of the multiple pairs of first facial features. If a weighted mean is used as the second mean disparity value, a same weight may be used for each pair of first facial features; or a larger weight may be used for first facial features with a higher matching degree; or when first facial features are a left eye or a right eye, a relatively large weight may be used, and when the first facial features are other features, a relatively small weight may be used.

S405. Determine a variation of a distance between the mobile terminal and a detected human face according to a variation of the second mean disparity value.

Specifically, starting from the second acquired binocular image, each time after a binocular image is acquired, a second mean disparity value of the binocular image acquired at a current moment is compared with a second mean disparity value of a binocular image acquired at a previous moment. If the second mean disparity value increases, it indicates that the distance between the mobile terminal and the detected human face decreases; if the second mean disparity value decreases, it indicates that the distance between the mobile terminal and the detected human face increases. For example, when an increase in the second mean disparity value is greater than a seventh threshold, a decrease in the distance between the mobile terminal and the detected human face is greater than a first threshold; when a decrease in the second mean disparity value is greater than an eighth threshold, an increase in the distance between the mobile terminal and the detected human face is greater than a second threshold.

Optionally, when the mobile terminal is in an incoming call state, a slider bar used for indicating the distance between the mobile terminal and the detected human face may be displayed on a screen of a mobile phone, and a location of a slider point on the slider bar may be adjusted according to the variation of the distance between the mobile terminal and the detected human face. Specifically, if it is detected that the distance between the mobile terminal and the detected human face decreases, the slider point on the slider bar moves in a direction; if it is detected that the distance between the mobile terminal and the detected human face increases, the slider point on the slider bar moves in an opposite direction. For example, the slider bar is a horizontal slider bar, there is an identifier for rejecting a call at a left end of the slider bar, there is an identifier for connecting a call at a right end of the slider bar, and there is a rounded slider point on the slider bar; if it is detected that the distance between the mobile terminal and the detected human face decreases, the slider point on the slider bar moves rightwards; if it is detected that the distance between the mobile terminal and the detected human face increases, the slider point on the slider bar moves leftwards.

S406. Perform corresponding processing on the incoming call according to the variation of the distance.

In this embodiment of the present invention, for a specific implementation manner of step S406, reference may be made to step S208 in the embodiment shown in FIG. 2, and details are not described herein again.

Optionally, if a processing result of the incoming call is maintaining an incoming call state, S401 may be returned to.

According to the incoming call processing method shown in FIG. 4, when a signal for an incoming call is received, an image may be acquired by using a front-facing binocular camera of a mobile terminal at a time interval; each time after an image is acquired, human face detection may be performed on the acquired image, and a variation of a distance between the mobile terminal and a human face may be calculated according to a variation of a mean disparity value of at least one pair of facial features that match each other; and corresponding incoming call processing may be performed according to the variation of the distance. Further, an instruction of a user may be interpreted according to the detection of the existence of face within the image, so as to decide whether to reject the incoming call. According to the incoming call processing method, processing such as answering or rejecting an incoming call may be automatically performed when a human face is detected, and an instruction of a user may be accurately analyzed according to a distance between a mobile terminal and the human face, and corresponding processing may be performed, thereby reducing a probability of mistakenly answering an incoming call and improving accuracy of incoming call processing. In addition, according to the method, the incoming call may further be rejected according to a change in the distance between the mobile terminal and the human face, so that incoming call processing manners are more diverse.

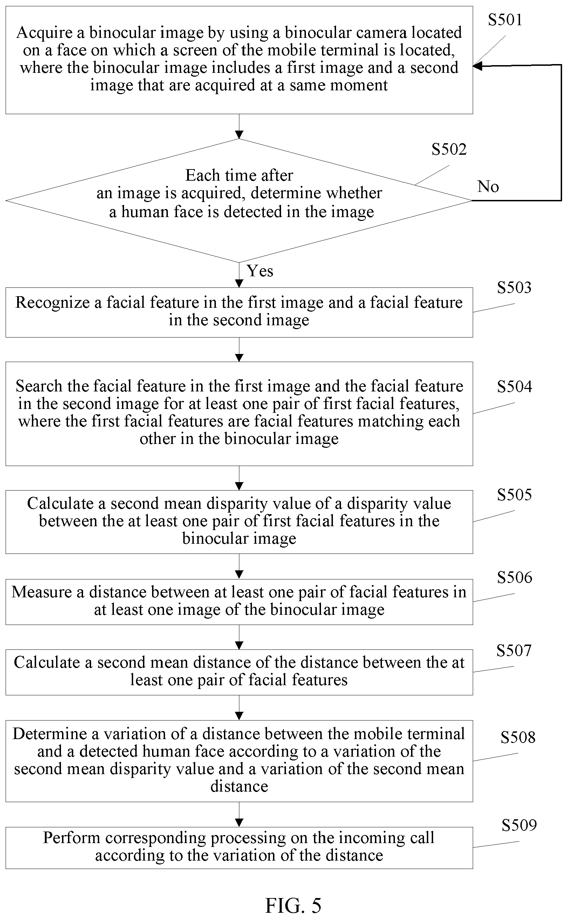

Referring to FIG. 5, FIG. 5 is a schematic flowchart of still another embodiment of an incoming call processing method according to an embodiment of the present invention. As shown in FIG. 5, the incoming call processing method may include the following steps:
S501. Acquire a binocular image by using a binocular camera located on a face on which a screen of the mobile terminal is located, where the binocular image includes a first image and a second image acquired at a same moment.

In this embodiment of the present invention, for a specific implementation manner of step S501, reference may be made to step S401 in the embodiment shown in FIG. 4, and details are not described herein again.

S502. Each time after an image is acquired, determine whether a human face is detected in the image; if yes, go to S503; otherwise, after a period of delay, return to S501.

In some feasible implementation manners, each time after an image is acquired, whether a facial area exists in the image may be roughly determined first. Optionally, whether there is a facial contour and a skin color feature in the image may be first detected, so as to preliminarily determine whether there is a human face in the image.

S503. Recognize a facial feature in the first image and a facial feature in the second image.

In this embodiment of the present invention, for a specific implementation manner of step S503, reference may be made to step S402 in the embodiment shown in FIG. 4, and details are not described herein again.

S504. Search the facial feature in the first image and the facial feature in the second image for at least one pair of first facial features, where the first facial features are facial features matching each other in the binocular image.

In this embodiment of the present invention, for a specific implementation manner of step S504, reference may be made to step S403 in the embodiment shown in FIG. 4, and details are not described herein again.

S505. Calculate a second mean disparity value of a disparity value between the at least one pair of first facial features in the binocular image.

In this embodiment of the present invention, for a specific implementation manner of step S505, reference may be made to step S404 in the embodiment shown in FIG. 4, and details are not described herein again.

S506. Measure a distance between at least one pair of facial features in at least one image of the binocular image.

In some feasible implementation manners, each time after a binocular image is acquired, if a human face is detected in the binocular image, at least one pair of facial features may be further selected in at least one image, and a distance between the at least one pair of facial features is measured, where the at least one pair of facial features is facial features in a same image, and the distance between the at least one pair of facial features may be measured in a unit of pixel, cm, inch, or the like.

Optionally, if only two facial features are recognized in one image, a distance between the two facial features is calculated. If more than two facial features are recognized in one image, in some feasible implementation manners, each facial feature may be paired with another facial feature one by one, and a distance between each pair of facial features is calculated. For example, if a left eye, a right eye, and a nose are recognized, a distance between the left eye and the right eye, a distance between the left eye and the nose, and a distance between the right eye and the nose are calculated. In some other feasible implementation manners, each facial feature may be paired with another facial feature relatively close to the facial feature, and then a distance between each pair of facial features is calculated. For example, if a left eye, a right eye, and a nose are recognized, the nose is paired with the left eye and the right eye separately, and a distance between the nose and the left eye and a distance between the nose and the right eye are calculated.

S507. Calculate a second mean distance of the distance between the at least one pair of facial features.

After the distance between the at least one pair of facial features in the at least one image is measured, the second mean distance is calculated, where the second mean distance is a mean of a distance between each pair of facial features, and may be a weighted mean, a median value, or an arithmetic mean. If the second mean distance is a weighted mean, a same weight may be used for a distance between each pair of facial features; or, a relatively large weight is used for a distance between a pair of facial features that are located closer to each other, for example, a larger weight is used for a distance between a left eye and a nose, and a smaller weight is used for a distance between the left eye and a mouth.

Optionally, if a distance between at least one pair of facial features in only one image is measured, the second mean distance is a mean of the distance between the at least one pair of facial features in the image; if a distance between at least one pair of facial features in each image of two images is measured, the second mean distance is a mean of all measured distances.

S508. Determine a variation of a distance between the mobile terminal and a detected human face according to a variation of the second mean disparity value and a variation of the second mean distance.

Specifically, starting from the second acquired image, each time after an image is acquired, a second mean disparity value of the image acquired at a current moment is compared with a second mean disparity value of an image acquired at a previous moment, and a second mean distance of the image acquired at the current moment is compared with a second mean distance of the image acquired at the previous moment. If both the second mean disparity value and the second mean distance increase, it indicates that the distance between the mobile terminal and the detected human face decreases; if both the second mean disparity value and the second mean distance decrease, it indicates that the distance between the mobile terminal and the detected human face increases. For example, when an increase in the second mean distance is greater than a third threshold and an increase in the second mean disparity value is greater than a seventh threshold, a decrease in the distance between the mobile terminal and the detected human face is greater than a first threshold; when a decrease in the second mean distance is greater than a fourth threshold and a decrease in the second mean disparity value is greater than an eighth threshold, an increase in the distance between the mobile terminal and the detected human face is greater than a second threshold.

S509. Perform corresponding processing on the incoming call according to the variation of the distance.

In this embodiment of the present invention, for a specific implementation manner of step S509, reference may be made to step S103 in the embodiment shown in FIG. 1, and details are not described herein again.

According to the incoming call processing method shown in FIG. 5, when a signal for an incoming call is received, an image may be acquired by using a front-facing binocular camera of a mobile terminal at a time interval; each time after an image is acquired, human face detection may be performed on the acquired image, and a variation of a distance between the mobile terminal and a human face may be calculated according to a variation of a mean disparity value of at least one pair of facial features that match each other in two images and a variation of a mean distance between at least one pair of facial features in a same image; and corresponding incoming call processing may be performed according to the variation of the distance. Further, an instruction of a user may be interpreted according to the detection of the existence of face within the image, so as to decide whether to reject the incoming call. According to the incoming call processing method, processing such as answering or rejecting an incoming call may be automatically performed when a human face is detected, and an instruction of a user may be accurately analyzed according to a distance between a mobile terminal and the human face, and corresponding processing may be performed, thereby reducing a probability of mistakenly answering an incoming call and improving accuracy of incoming call processing. In addition, according to the method, the incoming call may further be rejected according to a change in the distance between the mobile terminal and the human face, so that incoming call processing manners are more diverse.

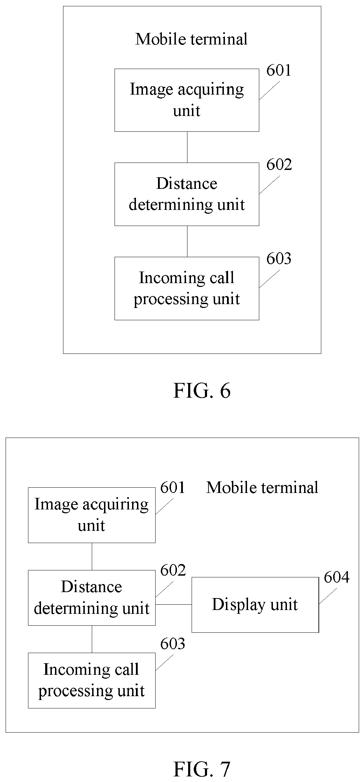

Referring to FIG. 6, FIG. 6 is a schematic structural diagram of an embodiment of a mobile terminal according to an embodiment of the present invention. As shown in FIG. 6, the mobile terminal may include an image acquiring unit 601, a distance determining unit 602, and an incoming call processing unit 603.

The image acquiring unit 601 is configured to: when a signal for an incoming call is received, acquire an image by using a preset shooting apparatus.

Optionally, the preset shooting apparatus may be a visible light camera, or a camera capturing a non-visible light spectrum, for example, an infrared camera, or may be a front-facing camera or a rear-facing camera of the mobile terminal, where front-facing indicates being located at a front face, which is generally a surface on which a screen is located, of the mobile terminal, and rear-facing indicates being located at a back face, which is generally a surface opposite to the screen, of the mobile terminal. Considering that a user needs to check caller identification display on the screen before answering or rejecting an incoming call, preferably, the preset shooting apparatus may be the front-facing camera of the mobile terminal, for example, a monocular camera or a binocular camera above the screen of the mobile terminal.

When a signal for an incoming call from a caller is received, the mobile terminal stays in an incoming call state, and in the incoming call state, the mobile terminal may acquire, at a time interval by using the preset shooting apparatus, an image within a field of view of the shooting apparatus, where the time interval for acquiring images may be preset or may be correspondingly set according to a motion speed of the mobile terminal. For example, a user generally needs Is or 2s to move the mobile terminal to an ear to answer an incoming call. In order to acquire enough images within this period of time, a fixed time interval for acquiring images may be set to less than Is, for example, 20 ms to 100 ms; or, after the first image is acquired, time required for the mobile terminal to move to the user's ear may be obtained by means of estimation according to a movement speed of the mobile terminal, and then a time interval for acquiring images may be determined according to the estimated time. A time interval for acquiring every two images may be different.

The distance determining unit 602 is configured to: each time after an image is acquired, perform human face detection on the image, and determine a variation of a distance between the mobile terminal and a detected human face.

Optionally, the performing human face detection on the image includes detecting a facial contour, a skin color feature, features of five sense organs, and/or the like in the image. During specific implementation, a method based on a skin color feature, a method based on a gray-scale feature, a human face detection method based on a heuristics model, and/or the like may be used.

After human face detection is performed on the image, if a human face is detected in the image, a distance between the mobile terminal and the detected human face is calculated. Optionally, if the preset shooting apparatus is a monocular camera, each time after an image is acquired, a mean distance of a distance between at least one pair of facial features in the image may be calculated. Starting from the second acquired image, a mean distance of a distance between at least one pair of facial features in the image acquired at a current moment is compared with a mean distance of a distance between at least one pair of facial features in an image acquired at an earlier moment, and a variation, from the earlier moment to the current moment, of the distance between the mobile terminal and the human face is calculated. Alternatively, if the preset shooting apparatus is a binocular camera, each time after a binocular image is acquired, a mean disparity value of at least two target points or at least two facial features in a facial area in a binocular image acquired at a current moment may be calculated, where the at least two facial features can match each other; and a variation, from an earlier moment to the current moment, of the distance between the mobile terminal and the human face is obtained by means of calculation according to a variation between the mean disparity value at the current moment and a mean disparity value at the earlier moment. Alternatively, if the preset shooting apparatus is a binocular camera, each time after a binocular image is acquired, a variation, in a period of time, of a mean distance of a distance between at least one pair of facial features in one image (for example, right view) of the binocular image may be calculated; a variation, from an earlier moment to a current moment, of a mean disparity value of at least two target points or at least two facial features in a facial area may be calculated, where the at least two facial features can match each other; and a variation of the distance between the mobile terminal and the human face may be calculated according to the two variations. Alternatively, in some embodiments, if a human face is detected in the image, it may be known that the preset shooting apparatus faces towards the human face. In this case, a distance between the mobile terminal and an object in front of the mobile terminal may be measured by using a distance measuring apparatus in or next to the shooting apparatus, and a variation of the distance is a variation of the distance between the mobile terminal and the detected human face. Optionally, the distance measuring apparatus may be an ultrasonic distance measuring apparatus, an infrared distance measuring apparatus, or the like. In some embodiments, the earlier moment may be any moment, before the current moment, at which an image is acquired, for example, may be a moment, before the current moment, at which the N^{th} image is acquired, where N is a positive integer greater than or equal to 1, for example, N = 1 or N = 2.

The incoming call processing unit 603 is configured to perform corresponding processing on the incoming call according to the variation of the distance.

Optionally, processing performed on the incoming call may include: connecting the incoming call, rejecting the incoming call, or holding the incoming call. Specifically, performing corresponding processing on the incoming call according to the variation of the distance between the mobile terminal and the human face may include at least one of the following:
(1) if a decrease in the distance between the mobile terminal and the human face reaches a first threshold within a period of time, connecting the incoming call;
(2) if an increase in the distance between the mobile terminal and the human face reaches a second threshold within a period of time, rejecting the incoming call; and
(3) if a decrease in the distance between the mobile terminal and the human face is less than the first threshold or an increase in the distance between the mobile terminal and the human face is less than the second threshold within a period of time, maintaining an incoming call state.

In this embodiment of the present invention, both the first threshold and the second threshold are greater than zero. If the distance between the mobile terminal and the human face decreases within a period of time, and a decrease reaches the first threshold, it may be determined that the mobile terminal apparently approaches the human face; in this case, generally, an action of a user is moving the mobile terminal to the user's ear for answering the incoming call, and then the incoming call may be connected. If the distance between the mobile terminal and the human face increases within a period of time, and an increase reaches the second threshold, it may be determined that the mobile terminal apparently moves in a direction far away from the human face; in this case, generally, an action of a user is moving away the mobile terminal that is picked up, with no desire to answer the incoming call, and then the incoming call may be rejected. If the variation of the distance between the mobile terminal and the human face, within a period of time, is in a range formed by the first threshold and the second threshold, it indicates that relative motion of the mobile terminal and the human face is inapparent; in this case, generally, an action of a user is checking caller identification display or hesitating whether to answer the incoming call, and then an incoming call state may be maintained. Specifically, the period of time may be a period of time between a current moment and a moment, before the current moment, at which the I^{th} image is acquired, where I is an integer greater than or equal to 1.

According to the mobile terminal shown in FIG. 6, when a signal for an incoming call is received, an image may be acquired by using a preset shooting apparatus at a time interval; each time after an image is acquired, human face detection may be performed on the acquired image, and a variation of a distance between the mobile terminal and a detected human face may be determined; and corresponding incoming call processing may be performed according to the variation of the distance. According to the mobile terminal, processing such as answering or rejecting an incoming call may be automatically performed when a human face is detected, and an instruction of a user may be accurately analyzed according to a variation of a distance between the mobile terminal and the human face, and corresponding processing may be performed, thereby reducing a probability of mistakenly answering an incoming call and improving accuracy of incoming call processing. In addition, according to the mobile terminal, the incoming call may further be rejected according to a change in the distance between the mobile terminal and the human face, so that incoming call processing manners are more diverse.

Referring to FIG. 7, FIG. 7 is a schematic structural diagram of another embodiment of a mobile terminal according to an embodiment of the present invention. As shown in FIG. 7, on the basis of FIG. 6, the mobile terminal may further include a display unit 604, where the display unit 604 is configured to:
if a human face is detected in the image, display a first identifier on a screen of the mobile terminal; or
if no human face is detected in the image, display a second identifier on a screen of the mobile terminal, or skip displaying the first identifier on a screen of the mobile terminal.

In some feasible implementation manners, if the human face is detected in the acquired image, the display unit 604 may display the first identifier on the screen, so as to remind the user that the human face has been detected at this moment; if no human face is detected in the image, the display unit 604 may display the second identifier on the screen or may not display the first identifier, so as to remind the user that no human face is detected at this moment.

In some feasible implementation manners, when the mobile terminal is in an incoming call state, the display unit 604 may further display a slider bar used for indicating the distance between the mobile terminal and the detected human face on a screen of a mobile phone, and adjust a location of a slider point on the slider bar according to the variation of the distance between the mobile terminal and the detected human face. Specifically, if it is detected that the distance between the mobile terminal and the detected human face decreases, the slider point on the slider bar moves in a direction; if it is detected that the distance between the mobile terminal and the detected human face increases, the slider point on the slider bar moves in an opposite direction. For example, the slider bar is a horizontal slider bar, there is an identifier for rejecting a call at a left end of the slider bar, there is an identifier for connecting a call at a right end of the slider bar, and there is a rounded slider point on the slider bar; if it is detected that the distance between the mobile terminal and the detected human face decreases, the slider point on the slider bar moves rightwards; if it is detected that the distance between the mobile terminal and the detected human face increases, the slider point on the slider bar moves leftwards.

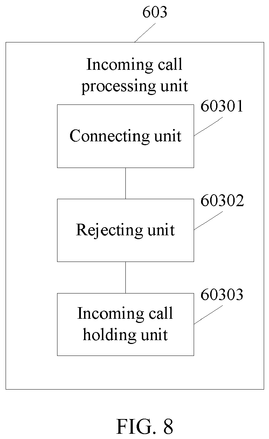

In some feasible implementation manners, as shown in FIG. 8, the incoming call processing unit 603 may include:
a connecting unit 60301, configured to connect the incoming call when a decrease in the distance between the mobile terminal and the human face reaches a first threshold within a period of time;
a rejecting unit 60302, configured to reject the incoming call when an increase in the distance between the mobile terminal and the human face reaches a second threshold within a period of time; and
an incoming call holding unit 60303, configured to maintain an incoming call state when a decrease in the distance between the mobile terminal and the human face is less than the first threshold or an increase in the distance between the mobile terminal and the human face is less than the second threshold within a period of time.

In some feasible implementation manners, the incoming call processing unit 603 may be further configured to:
if a human face is detected in an image that is acquired at a moment before a current moment, but no human face is detected in the image that is acquired at the current moment, reject the incoming call; or if a human face is detected in an image that is acquired at a moment before a current moment, but no human face is detected in images that are acquired at the current moment and within a period of time before the current moment, reject the incoming call. Specifically, the moment before the current moment refers to any moment, before the current moment, at which an image is acquired. The period of time before the current time may be a preset period of time, for example, a period of time between 0.2 second before the current time and the current time; or may be a period of time between a moment, before the current moment, at which the M^{th} image is acquired and the current time, where M is a positive integer greater than or equal to 1, for example, M = 1 or M = 3.

If the human face is detected in the image that is acquired at the moment before the current moment, but no human face is detected in the image that is acquired at the current moment, or the human face is detected in the image that is acquired at the moment before the current moment, but no human face is detected in the images that are acquired at the current moment and within the period of time before the current moment, it indicates that the user may have seen the incoming call but move the mobile terminal away; in this case, it may be determined that the user has no desire to answer the incoming call and rejects the incoming call.

In some feasible implementation manners, if no human face is detected all along, or a human face is occasionally detected, the incoming call state may be maintained, and the preset shooting apparatus may continuously be used to acquire an image.

In some feasible implementation manners, the image acquiring unit 601 may be further configured to: after the mobile terminal moves, acquire an image by using the preset shooting apparatus.

Optionally, whether the mobile terminal is in a motion state may be determined by means of analyzing a change in an output signal or an output signal from an apparatus such as a speed sensor, an acceleration sensor, a gyroscope, or a direction sensor inside the mobile terminal. For example, a movement speed of the mobile terminal may be detected by using a speed sensor, and therefore, whether the mobile terminal is in a motion state may be determined; deflection or tilting motion of the mobile terminal may be detected by using a gyroscope.

In some feasible implementation manners, the incoming call processing unit 603 may be further configured to maintain an incoming call state when the mobile terminal is not in a motion state.

If the mobile terminal is not in a motion state, that is, an instruction entered by the user is not detected, it is difficult to determine whether the user perceives the incoming call or whether the user intends to connect the incoming call; the incoming call processing unit 603 may maintain the incoming call state, to wait for the user to enter the instruction.

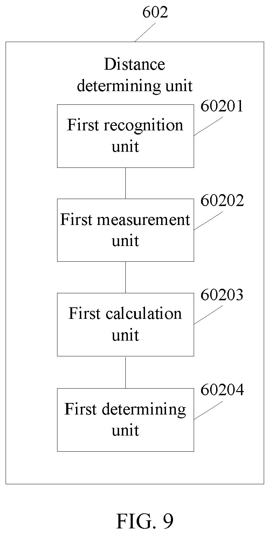

In some feasible implementation manners, the preset shooting apparatus is a monocular camera; in this case, as shown in FIG. 9, the distance determining unit 602 includes:
a first recognition unit 60201, configured to recognize at least two facial features in the image acquired by the monocular camera;
a first measurement unit 60202, configured to measure a distance between at least one pair of facial features of the at least two facial features;
a first calculation unit 60203, configured to calculate a first mean distance of the distance between the at least one pair of facial features of the at least two facial features; and
a first determining unit 60204, configured to determine the variation of the distance between the mobile terminal and the detected human face according to a variation of the first mean distance.

In some feasible implementation manners, the preset shooting apparatus is a monocular camera, and may be a front-facing monocular camera or a rear-facing monocular camera of the mobile terminal. Preferably, the preset shooting apparatus may be a front-facing monocular camera, that is, a monocular camera located on a face on which the screen of the mobile terminal is located. Specifically, the monocular camera is a camera having one camera lens. At a moment, the monocular camera acquires only one image from a specific angle.

In some feasible implementation manners, each time after an image is acquired, whether a facial area exists in the image may be roughly determined first. Optionally, whether there is a facial contour and a skin color feature in the image may be first detected, so as to preliminarily determine whether there is a human face in the image.

If a human face is detected in the image acquired by the monocular camera, at least two facial features in the image may be further recognized, so that locations of the at least two facial features are determined. The facial features may include features of five sense organs such as a left eye, a right eye, a left eyebrow, a right eyebrow, a nose, and a mouth. Optionally, a model of the five sense organs may be pre-established, and the foregoing features of the five sense organs may be detected separately based on the model; for example, dual matching of luminance and chromaticity may be performed separately on the foregoing features of the five sense organs, so as to determine whether the foregoing features of the five sense organs exist in the image and to determine locations of the foregoing features of the five sense organs. Optionally, some facial feature points, for example, texture features of non-flat areas such as the five sense organs, the eyebrows, teeth, nevus, and wrinkles, may further be extracted by using a local-feature detection operator such as an SIFT (Scale-Invariant Feature Transform, Scale-Invariant Feature Transform) algorithm and an SURF (Speeded Up Robust Features, Speeded Up Robust Features) algorithm.

After the at least two facial features are recognized, the recognized features may be paired, and a distance between the at least one pair of facial features is measured separately. Optionally, if only two facial features are recognized, a distance between the two facial features is calculated. If more than two facial features are recognized, in some feasible implementation manners, each facial feature may be paired with another facial feature one by one, and a distance between each pair of facial features is calculated. For example, if a left eye, a right eye, and a nose are recognized, a distance between the left eye and the right eye, a distance between the left eye and the nose, and a distance between the right eye and the nose are calculated. In some other feasible implementation manners, each facial feature may be paired with another facial feature relatively close to the facial feature, and then a distance between each pair of facial features is calculated. For example, if a left eye, a right eye, and a nose are recognized, the nose is paired with the left eye and the right eye separately, and a distance between the nose and the left eye and a distance between the nose and the right eye are calculated.

In some feasible implementation manners, the distance between the foregoing at least one pair of facial features is a distance in the image, and the foregoing distance may be measured in a unit of pixel, cm, inch, or the like.

After the distance between the at least one pair of facial features is measured, a mean, that is, the first mean distance, of the distance between the at least one pair of facial features is calculated. Optionally, the first mean distance may be a weighted mean, a median value, or a geometric mean of the distance between the at least one pair of facial features. If the first mean distance is a weighted mean, a same weight may be used for a distance between each pair of facial features; or, a relatively large weight is used for a distance between a pair of facial features that are located closer to each other, for example, a larger weight is used for a distance between a left eye and a nose, and a smaller weight is used for a distance between the left eye and a mouth.

Specifically, starting from the second acquired image, each time after an image is acquired, a first mean distance of the image acquired at a current moment is compared with a first mean distance of an image acquired at a previous moment. If the first mean distance increases, it indicates that the distance between the mobile terminal and the detected human face decreases; if the first mean distance decreases, it indicates that the distance between the mobile terminal and the detected human face increases. For example, when an increase in the first mean distance is greater than a third threshold, a decrease in the distance between the mobile terminal and the detected human face is greater than a first threshold; when a decrease in the first mean distance is greater than a fourth threshold, an increase in the distance between the mobile terminal and the detected human face is greater than a second threshold.

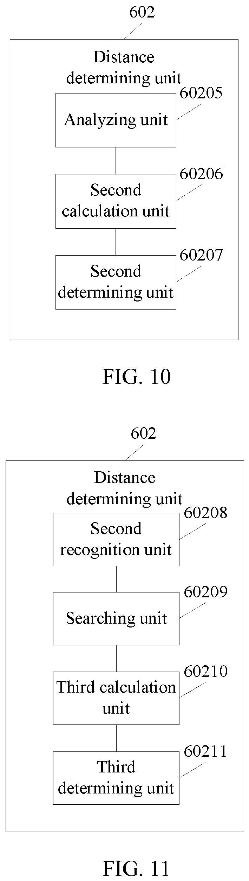

In some feasible implementation manners, the image acquiring unit 601 is specifically configured to acquire a binocular image by using a binocular camera, where the binocular image includes a first image and a second image acquired at a same moment. In this case, optionally, as shown in FIG. 10, the distance determining unit 602 may include:
an analyzing unit 60205, configured to analyze the first image to determine a facial area in the first image;
a second calculation unit 60206, configured to calculate a first mean disparity value of disparity values between at least two pixels in the facial area and corresponding pixels in the second image; and
a second determining unit 60207, configured to determine the variation of the distance between the mobile terminal and the detected human face according to a variation of the first mean disparity value.

In some feasible implementation manners, a preset shooting apparatus may be a front-facing binocular camera of the mobile terminal, that is, the binocular camera located on the face on which the screen of the mobile terminal is located. Optionally, the binocular camera includes two camera lenses, where the two camera lenses may be arranged horizontally, vertically, or diagonally. Specifically, when a shape of the screen of the mobile terminal is a rectangle, a line connecting optical centers of the two camera lenses may be parallel or perpendicular to an upper edge of the screen, or form an included angle less than 90 degrees with the upper edge of the screen. At a moment, the binocular camera may acquire an image from each of two different angles by using the foregoing two camera lenses, namely, the first image and the second image. In this embodiment, the first image and the second image are collectively called the binocular image.

Specifically, a time interval for acquiring binocular images may be correspondingly set according to a motion speed of the mobile terminal. For example, a user generally needs Is or 2s to move the mobile terminal to an ear to answer an incoming call. In order to acquire enough images within this period of time, a fixed time interval for acquiring binocular images may be set to less than Is, for example, 25 ms to 50 ms; or, after the first image is acquired, time required for the mobile terminal to move to the user's ear may be obtained by means of estimation according to a movement speed of the mobile terminal, and then a time interval for acquiring binocular images may be determined according to the estimated time. A time interval for acquiring every two images may be different.

If a human face is detected in the binocular image, the facial area may be first determined in one of the binocular image. Optionally, the facial area may be a rectangular area including the human face, or may be an area formed by a facial contour.

In this embodiment of the present invention, a same target point forms images separately by using the two camera lenses of the binocular camera, where a location, in the first image, of an image of the target point is different from that in the second image, and a difference of coordinates, in the first image and the second image, of the images of the target point is a disparity value of the images of the target point. Generally, the first image and the second image should use a same origin of coordinates and same coordinate axes. For example, both the first image and the second image use their top left corners as the origin of coordinates, use a rightward horizontal direction as a positive direction of an abscissa axis, and use a downward vertical direction as a positive direction of an ordinate axis. Optionally, the disparity value may be measured in a unit of pixel.

Optionally, when the two camera lenses of the binocular camera are horizontally arranged, a difference of abscissas, in the first image and the second image, of the images of the target point may be used as a disparity value of the target point in the binocular image simply; when the two camera lenses of the binocular camera are vertically arranged, a difference of ordinates, in the first image and the second image, of the images of the target point may be used as a disparity value of the target point in the binocular image simply.

Specifically, after the facial area in the first image is determined, at least two pixels may be selected from the facial area in the first image, and corresponding pixels matching the at least two pixels are found in the second image. For example, imaging pixels of two corners of a left eye are selected from the facial area in the first image, and then the second image is searched for imaging pixels of the two corners of the left eye, which are used as corresponding matched pixels. After the at least two pixels in the first image and the corresponding pixels, in the second image, of the at least two pixels are determined, a disparity value between each pixel and a pixel corresponding to the pixel is calculated, and a weighted mean, a median value, or a geometric mean of these disparity values may be taken and be used as the first mean disparity value.

Specifically, starting from the second acquired binocular image, each time after a binocular image is acquired, a first mean disparity value of the binocular image acquired at a current moment is compared with a first mean disparity value of a binocular image acquired at a previous moment. If the first mean disparity value increases, it indicates that the distance between the mobile terminal and the detected human face decreases; if the first mean disparity value decreases, it indicates that the distance between the mobile terminal and the detected human face increases. For example, when an increase in the first mean disparity value is greater than a fifth threshold, a decrease in the distance between the mobile terminal and the detected human face is greater than a first threshold; when a decrease in the first mean disparity value is greater than a sixth threshold, an increase in the distance between the mobile terminal and the detected human face is greater than a second threshold.

In some feasible implementation manners, when the image acquiring unit 601 is specifically configured to acquire the binocular image by using the binocular camera, optionally, as shown in FIG. 11, the distance determining unit 602 may include:
a second recognition unit 60208, configured to recognize a facial feature in the first image and a facial feature in the second image;
a searching unit 60209, configured to search the facial feature in the first image and the facial feature in the second image for at least one pair of first facial features, where the first facial features are facial features matching each other in the binocular image;
a third calculation unit 60210, configured to calculate a second mean disparity value of a disparity value between the at least one pair of first facial features in the binocular image; and
a third determining unit 60211, configured to determine the variation of the distance between the mobile terminal and the detected human face according to a variation of the second mean disparity value.

In this embodiment of the present invention, facial features may include features of five sense organs such as a left eye, a right eye, a left eyebrow, a right eyebrow, a nose, and a mouth. Optionally, a model of the five sense organs may be pre-established, and the foregoing features of the five sense organs may be detected separately based on the model; for example, dual matching of luminance and chromaticity may be performed separately on the foregoing features of the five sense organs, so as to determine whether the foregoing features of the five sense organs exist in the image and to determine locations of the foregoing features of the five sense organs. Optionally, some facial feature points, for example, texture features of non-flat areas such as the five sense organs, the eyebrows, teeth, nevus, and wrinkles, may further be extracted by using a local-feature detection operator such as an SIFT algorithm and an SURF algorithm.

During specific implementation, after the facial features are recognized, the facial features may be marked. For example, the facial features are marked with a "left eye", a "right eye", a "left eyebrow", a "right eyebrow", a "mouth", a "nose", a "nevus", a "wrinkle", and the like. Locations of the recognized facial features in the images may further be determined. Optionally, a location of a recognized facial feature may be marked by using coordinates of a pixel in the facial feature, for example, marked by using coordinates of a central point.

In some feasible implementation manners, human face detection may be first performed on the first image, to recognize a facial feature in the first image; then detection may be performed on the second image according to the recognized facial feature in the first image, and a facial feature matching the facial feature in the first image may be found in the second image.

In some other feasible implementation manners, human face detection may be performed separately on the first image and the second image, so as to separately recognize a facial feature in the first image and a facial feature in the second image.

Correspondingly, if a facial feature in the first image is first recognized, detection is then performed on the second image according to the facial feature in the first image, and a facial feature matching the facial feature in the first image is found in the second image, the facial feature found in the second image and the facial feature, corresponding to the facial feature in the second image, in the first image are the first facial features. During specific implementation, when a difference between feature values of a feature in the first image and a feature in the second image is less than a preset difference threshold, it is considered that the two features match each other, where the difference between the feature values may include but be not limited to a difference between SIFT feature values and a difference between SURF feature values.

Optionally, after a facial feature F1 in the first image is recognized, a specific area in the second image may be searched for a facial feature F2 matching the feature F1. The specific area may be a circular area or a rectangular area in which coordinates of a central point are the same as coordinates of the first facial feature F1, or may be the entire second image. If one feature F2 is found in the second image, the feature F2 and the feature F1 are a pair of first facial features; if multiple features F2 are found in the second image, the feature F1 and a feature F2 whose feature value is closest to the feature value of the feature F1 are a pair of first facial features.

Correspondingly, if human face detection is performed separately on the first image and the second image, and a facial feature in the first image and a facial feature in the second image are separately recognized, the facial feature in the first image may be compared with the facial feature in the second image, and facial features that can match each other are the first facial features.

Optionally, if a facial feature recognized in the first image and a facial feature recognized in the second image are separately marked, facial features that are marked the same in the first image and the second image are a pair of first facial features. For example, the feature recognized in the first image includes a feature F3, the feature F3 is marked as a "left eye", the feature recognized in the second image includes a feature F4, and the feature F4 is also marked as a "left eye"; then it is determined that the feature F3 and the feature F4 match each other, and the feature F3 in the first image and the feature F4 in the second image are a pair of first facial features.

After the at least one pair of first facial features is found, a disparity value between each pair of first facial features, that is, a difference of coordinates, in the first image and the second image, of each pair of first facial features, is calculated. Optionally, when two camera lenses of the binocular camera are horizontally arranged, a difference of abscissas of one pair of first facial features separately in the first image and the second image may be used as a disparity value between the pair of first facial features in the binocular image simply; when the two camera lenses of the binocular camera are vertically arranged, a difference of ordinates of one pair of first facial features separately in the first image and the second image may be used as a disparity value between the pair of first facial features in the binocular image simply.

Optionally, if one pair of first facial features is found, the second mean disparity value is a disparity value between the pair of first facial features; if multiple pairs of first facial features are found, the second mean disparity value may be a weighted mean, a geometric mean, or a median value of disparity values of the multiple pairs of first facial features. If a weighted mean is used as the second mean disparity value, a same weight may be used for each pair of first facial features; or a larger weight may be used for first facial features with a higher matching degree; or when first facial features are a left eye or a right eye, a relatively large weight may be used, and when the first facial features are other features, a relatively small weight may be used.

Specifically, starting from the second acquired binocular image, each time after a binocular image is acquired, a second mean disparity value of the binocular image acquired at a current moment is compared with a second mean disparity value of a binocular image acquired at a previous moment. If the second mean disparity value increases, it indicates that the distance between the mobile terminal and the detected human face decreases; if the second mean disparity value decreases, it indicates that the distance between the mobile terminal and the detected human face increases. For example, when an increase in the second mean disparity value is greater than a seventh threshold, a decrease in the distance between the mobile terminal and the detected human face is greater than a first threshold; when a decrease in the second mean disparity value is greater than an eighth threshold, an increase in the distance between the mobile terminal and the detected human face is greater than a second threshold.

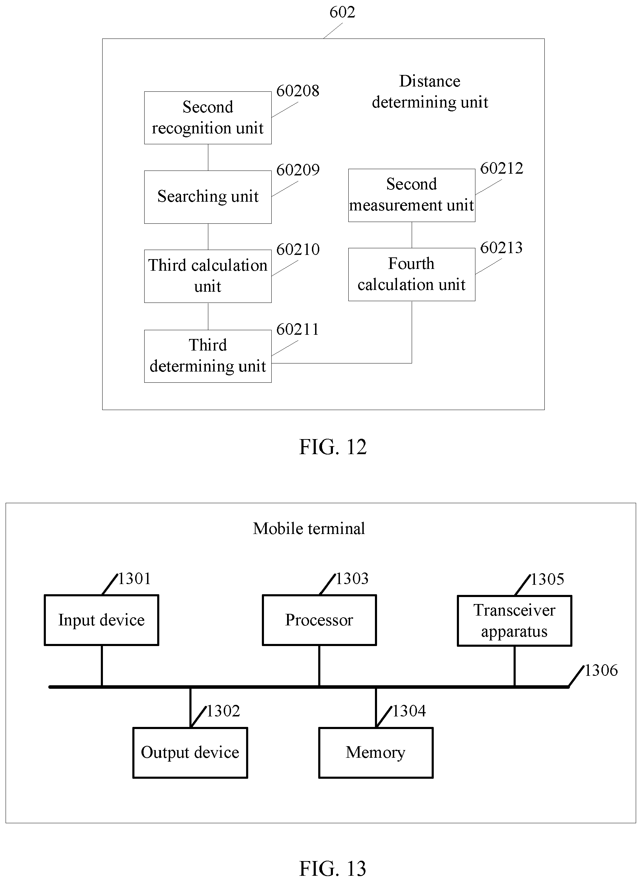

In some feasible implementation manners, as shown in FIG. 12, on the basis of FIG. 11, the distance determining unit 602 may further include a second measurement unit 60212 and a fourth calculation unit 60213, where:
the second measurement unit 60212 is configured to measure a distance between at least one pair of facial features in at least one image of the binocular image; and
the fourth calculation unit 60213 is configured to calculate a second mean distance of the distance between the at least one pair of facial features.

In this case, the third determining unit 60211 is specifically configured to determine the variation of the distance between the mobile terminal and the detected human face according to the variation of the second mean disparity value and a variation of the second mean distance.

In some feasible implementation manners, each time after a binocular image is acquired, if a human face is detected in the binocular image, at least one pair of facial features may be further selected in at least one image, and a distance between the at least one pair of facial features is measured, where the at least one pair of facial features is facial features in a same image, and the distance between the at least one pair of facial features may be measured in a unit of pixel, cm, inch, or the like.

Optionally, if only two facial features are recognized in one image, a distance between the two facial features is calculated. If more than two facial features are recognized in one image, in some feasible implementation manners, each facial feature may be paired with another facial feature one by one, and a distance between each pair of facial features is calculated. For example, if a left eye, a right eye, and a nose are recognized, a distance between the left eye and the right eye, a distance between the left eye and the nose, and a distance between the right eye and the nose are calculated. In some other feasible implementation manners, each facial feature may be paired with another facial feature relatively close to the facial feature, and then a distance between each pair of facial features is calculated. For example, if a left eye, a right eye, and a nose are recognized, the nose is paired with the left eye and the right eye separately, and a distance between the nose and the left eye and a distance between the nose and the right eye are calculated.

After the distance between the at least one pair of facial features in the at least one image is measured, the second mean distance is calculated, where the second mean distance is a mean of a distance between each pair of facial features, and may be a weighted mean, a median value, or an arithmetic mean. If the second mean distance is a weighted mean, a same weight may be used for a distance between each pair of facial features; or, a relatively large weight is used for a distance between a pair of facial features that are located closer to each other, for example, a larger weight is used for a distance between a left eye and a nose, and a smaller weight is used for a distance between the left eye and a mouth.

Optionally, if a distance between at least one pair of facial features in only one image is measured, the second mean distance is a mean of the distance between the at least one pair of facial features in the image; if a distance between at least one pair of facial features in each image of two images is measured, the second mean distance is a mean of all measured distances.

Specifically, starting from the second acquired image, each time after an image is acquired, a second mean disparity value of the image acquired at a current moment is compared with a second mean disparity value of an image acquired at a previous moment, and a second mean distance of the image acquired at the current moment is compared with a second mean distance of the image acquired at the previous moment. If both the second mean disparity value and the second mean distance increase, it indicates that the distance between the mobile terminal and the detected human face decreases; if both the second mean disparity value and the second mean distance decrease, it indicates that the distance between the mobile terminal and the detected human face increases. For example, when an increase in the second mean distance is greater than a third threshold and an increase in the second mean disparity value is greater than a seventh threshold, a decrease in the distance between the mobile terminal and the detected human face is greater than a first threshold; when a decrease in the second mean distance is greater than a fourth threshold and a decrease in the second mean disparity value is greater than an eighth threshold, an increase in the distance between the mobile terminal and the detected human face is greater than a second threshold.

According to the mobile terminal in this embodiment of the present invention, when a signal for an incoming call is received, an image may be periodically acquired by using a monocular camera or a binocular camera of the mobile terminal; each time after an image is acquired, human face detection may be performed on the acquired image and a variation of a distance between the mobile terminal and a human face may be calculated according to a variation of a mean disparity value of at least one pair of facial features that match each other in two images and/or a variation of a mean distance between at least one pair of facial features in a same image; and corresponding incoming call processing may be performed according to the variation of the distance. Further, an instruction of a user may be interpreted according to the detection of the existence of face within the image, so as to decide whether to reject the incoming call. According to the mobile terminal, processing such as answering or rejecting an incoming call may be automatically performed when a human face is detected, and an instruction of a user may be accurately analyzed according to the distance between the mobile terminal and the human face, and corresponding processing may be performed, thereby reducing a probability of mistakenly answering an incoming call and improving accuracy of incoming call processing. In addition, according to the mobile terminal, the incoming call may further be rejected according to a change in the distance between the mobile terminal and the human face, so that incoming call processing manners are more diverse.

Referring to FIG. 13, FIG. 13 is a schematic structural diagram of still another embodiment of a mobile terminal according to an embodiment of the present invention. As shown in FIG. 13, the mobile terminal may include at least one input device 1301, at least one output device 1302, at least one processor 1303, for example, a CPU, at least one memory 1304, and at least one transceiver apparatus 1305. The foregoing input device 1301, output device 1302, processor 1303, memory 1304, and transceiver apparatus 1305 are connected by using a bus 1306.

The foregoing input device 1301 may be specifically a key, a keyboard, or a touch control panel of the mobile terminal, where the touch control panel includes a touchscreen, a touch control screen, and the like; the input device 1301 is configured to receive information or an instruction entered by a user.

The foregoing output device 1302 may be specifically a display of the terminal, and is configured to output and display image data.

The foregoing transceiver apparatus 1305 is specifically configured to receive a signal sent by another device or send a signal to another device, for example, receive a signal for an incoming call or send a signal for an outgoing call.

The foregoing memory 1304 may be a high-speed RAM memory, or may be a non-volatile memory (non-volatile memory), for example, a magnetic disk memory. The foregoing memory 1304 is configured to store program code and some non-program data (for example, image data), and the foregoing processor 1303 is configured to invoke the program code stored in the memory 1304, to execute the following operations:
when a signal for an incoming call is received, acquiring an image by using a preset shooting apparatus;
each time after an image is acquired, performing human face detection on the image, and determining a variation of a distance between the mobile terminal and a detected human face; and
performing corresponding processing on the incoming call according to the variation of the distance between the mobile terminal and the human face.

In some feasible implementation manners, that the foregoing processor 1303 performs corresponding processing on the incoming call according to the variation of the distance between the mobile terminal and the human face includes:
connecting the incoming call if a decrease in the distance reaches a first threshold within a period of time.

In some feasible implementation manners, that the foregoing processor 1303 performs corresponding processing on the incoming call according to the variation of the distance between the mobile terminal and the human face includes:
rejecting the incoming call if an increase in the distance reaches a second threshold within a period of time.

In some feasible implementation manners, that the foregoing processor 1303 performs corresponding processing on the incoming call according to the variation of the distance between the mobile terminal and the human face includes:
maintaining an incoming call state if a decrease in the distance is less than the first threshold or an increase in the distance is less than the second threshold within a period of time.

In some feasible implementation manners, the preset shooting apparatus is a monocular camera; and
that the foregoing processor 1303 performs human face detection on the image, and determines a variation of a distance between the mobile terminal and a detected human face includes:
recognizing at least two facial features in the image acquired by the monocular camera;
measuring a distance between at least one pair of facial features of the at least two facial features;
calculating a first mean distance of the distance between the at least one pair of facial features of the at least two facial features; and
determining the variation of the distance between the mobile terminal and the detected human face according to a variation of the first mean distance.

In some feasible implementation manners, that the foregoing processor 1303 acquires the image by using the preset shooting apparatus includes:
acquiring a binocular image by using a binocular camera, where the binocular image includes a first image and a second image acquired at a same moment.

In some feasible implementation manners, that the foregoing processor 1303 performs human face detection on the image, and determines a variation of a distance between the mobile terminal and a detected human face includes:
analyzing the first image to determine a facial area in the first image;
calculating a first mean disparity value of disparity values between at least two pixels in the facial area and corresponding pixels in the second image; and
determining the variation of the distance between the mobile terminal and the detected human face according to a variation of the first mean disparity value.

In some feasible implementation manners, that the foregoing processor 1303 performs human face detection on the image, and determines a variation of a distance between the mobile terminal and a detected human face includes:
recognizing a facial feature in the first image and a facial feature in the second image;
searching the facial feature in the first image and the facial feature in the second image for at least one pair of first facial features, where the first facial features are facial features matching each other in the binocular image;
calculating a second mean disparity value of a disparity value between the at least one pair of first facial features in the binocular image; and
determining the variation of the distance between the mobile terminal and the detected human face according to a variation of the second mean disparity value.

In some feasible implementation manners, that the foregoing processor 1303 performs human face detection on the image, and determines a variation of a distance between the mobile terminal and a detected human face further includes:
measuring a distance between at least one pair of facial features in at least one image of the binocular image; and
calculating a second mean distance of the distance between the at least one pair of facial features; and
the determining the variation of the distance between the mobile terminal and the detected human face according to a variation of the second mean disparity value is specifically:
   determining the variation of the distance between the mobile terminal and the detected human face according to the variation of the second mean disparity value and a variation of the second mean distance.

In some feasible implementation manners, after performing human face detection on the image, the foregoing processor 1303 is further configured to invoke the program code stored in the memory 1304, to execute the following operations:
if a human face is detected in an image that is acquired at a moment before a current moment, but no human face is detected in the image that is acquired at the current moment, rejecting the incoming call; or
if a human face is detected in an image that is acquired at a moment before a current moment, but no human face is detected in images that are acquired at the current moment and within a period of time before the current moment, rejecting the incoming call.

In some feasible implementation manners, after performing human face detection on the image, the foregoing processor 1303 is further configured to invoke the program code stored in the memory 1304, to execute the following operations:
if a human face is detected in the image, displaying a first identifier on a screen of the mobile terminal; or
if no human face is detected in the image, displaying a second identifier on a screen of the mobile terminal, or skipping displaying the first identifier on a screen of the mobile terminal.

According to the mobile terminal in this embodiment of the present invention, when a signal for an incoming call is received, an image may be acquired by using a monocular camera or a binocular camera of the mobile terminal; each time after an image is acquired, human face detection may be performed on the acquired image, and a variation of a distance between the mobile terminal and a human face may be calculated according to a variation of a mean disparity value of at least one pair of facial features that match each other in two images and/or a variation of a mean distance between at least one pair of facial features in a same image; and corresponding incoming call processing may be performed according to the variation of the distance. Further, an instruction of a user may be interpreted according to the detection of the existence of face within the image, so as to decide whether to reject the incoming call. According to the mobile terminal, processing such as answering or rejecting an incoming call may be automatically performed when a human face is detected, and an instruction of a user may be accurately analyzed according to a distance between the mobile terminal and the human face, and corresponding processing may be performed, thereby reducing a probability of mistakenly answering an incoming call and improving accuracy of incoming call processing. In addition, according to the mobile terminal, the incoming call may further be rejected according to a change in the distance between the mobile terminal and the human face, so that incoming call processing manners are more diverse.

Sequence adjustment, combination, and deletion may be performed on steps of the method in the embodiments of the present invention according to an actual need.

Combination, division, and deletion may be performed on modules or units of the terminal in the embodiments of the present invention according to an actual need.

The modules or the units in the embodiments of the present invention may be implemented by using a general purpose integrated circuit (for example, a central processing unit CPU) or an application-specific integrated circuit (ASIC).

A person of ordinary skill in the art may understand that all or some of the processes of the methods in the embodiments may be implemented by a computer program instructing related hardware. The program may be stored in a computer-readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

The foregoing implementation manners are not intended to limit the protection scope of the technical solutions. Any modification, equivalent replacement, and improvement made without departing from the principle of the foregoing implementation manners shall fall within the protection scope of the technical solutions.

## Claims

1. An incoming call processing method, comprising:
when a signal for an incoming call is received, acquiring (S101) an image by using a preset shooting apparatus;
each time after an image is acquired, performing (S102) human face detection on the image, and determining a variation of a distance between a mobile terminal and a detected human face; and
performing (S103) corresponding processing on the incoming call according to the variation of the distance;
wherein, the performing (S103) corresponding processing on the incoming call according to the variation of the distance comprises:
connecting the incoming call if a decrease in the distance reaches a first threshold within a period of time; or
rejecting the incoming call if an increase in the distance reaches a second threshold within a period of time; or
maintaining an incoming call state if a decrease in the distance is less than a first threshold or an increase in the distance is less than a second threshold within a period of time;
wherein the determining a variation of a distance between a mobile terminal and a detected human face comprises:
when a human face is detected in the acquired image, measuring, by a distance measuring apparatus, the distance between the mobile terminal and the detected human face, wherein the distance measuring apparatus comprises an ultrasonic distance measuring apparatus or an infrared distance measuring apparatus.

2. A mobile terminal, comprising:
an image acquiring unit (601), configured to: when a signal for an incoming call is received, acquire an image by using a preset shooting apparatus;
a distance determining unit (602), configured to: each time after an image is acquired, perform human face detection on the image, and determine a variation of a distance between the mobile terminal and a detected human face; and
an incoming call processing unit (603), configured to perform corresponding processing on the incoming call according to the variation of the distance;
wherein the incoming call processing unit (603) comprises:
a connecting unit (60301), configured to connect the incoming call when a decrease in the distance reaches a first threshold within a period of time; or
a rejecting unit (60302), configured to reject the incoming call when an increase in the distance reaches a second threshold within a period of time; or
an incoming call holding unit (60303), configured to maintain an incoming call state when a decrease in the distance is less than a first threshold or an increase in the distance is less than the second threshold within a period of time;
wherein the distance determining unit (602) comprises a distance measuring apparatus, the distance measuring apparatus is configured to, when a human face is detected in the acquired image, measure the distance between the mobile terminal and the detected human face, wherein the distance measuring apparatus comprises an ultrasonic distance measuring apparatus or an infrared distance measuring apparatus.

## Patentansprüche

1. Verfahren zur Verarbeitung eingehender Anrufe, umfassend:
Erfassen (S101) eines Bildes durch Verwenden einer voreingestellten Aufnahmevorrichtung bei Empfang eines Signals für einen eingehenden Anruf;
Durchführen (S102) von Gesichtserkennung am Bild nach jeder Bilderfassung und Bestimmen einer Änderung eines Abstands zwischen einem mobilen Endgerät und einem erkannten Gesicht; und
Durchführen (S103) entsprechender Verarbeitung am eingehenden Anruf gemäß der Änderung des Abstands;
wobei das Durchführen (S103) entsprechender Verarbeitung am eingehenden Anruf gemäß der Änderung des Abstands umfasst:
Verbinden des eingehenden Anrufs, wenn eine Abnahme des Abstands innerhalb eines Zeitraums eine erste Schwelle erreicht; oder
Abweisen des eingehenden Anrufs, wenn eine Zunahme des Abstands innerhalb eines Zeitraums eine zweite Schwelle erreicht; oder
Aufrechterhalten eines Eingangsanrufzustands, wenn innerhalb eines Zeitraums eine Abnahme des Abstands unter einer ersten Schwelle liegt oder eine Zunahme des Abstands unter einer zweiten Schwelle liegt;
wobei das Bestimmen einer Änderung eines Abstands zwischen einem mobilen Endgerät und einem erkannten Gesicht umfasst:
Messen des Abstands zwischen dem mobilen Endgerät und dem erkannten Gesicht bei Erkennung eines Gesichts im erfassten Bild durch eine Abstandsmessvorrichtung, wobei die Abstandsmessvorrichtung eine Ultraschall-Abstandsmessvorrichtung oder eine Infrarot-Abstandsmessvorrichtung umfasst.

2. Mobiles Endgerät, umfassend:
eine Bilderfassungseinheit (601), die konfiguriert ist zum: Erfassen eines Bildes durch Verwenden einer voreingestellten Aufhahmevorrichtung bei Empfang eines Signals für einen eingehenden Anruf;
ein Abstandsbestimmungseinheit (602), die konfiguriert ist zum: Durchführen von Gesichtserkennung am Bild nach jeder Bilderfassung und Bestimmen einer Änderung eines Abstands zwischen dem mobilen Endgerät und einem erkannten Gesicht; und
eine Einheit zum Verarbeiten eingehender Anrufe (603), die zum Durchführen entsprechender Verarbeitung am eingehenden Anruf gemäß der Änderung des Abstands konfiguriert ist;
wobei die Einheit zum Verarbeiten eingehender Anrufe (603) umfasst:
eine Verbindungseinheit (60301), die so konfiguriert ist, dass sie den eingehenden Anruf verbindet, wenn eine Abnahme des Abstands innerhalb eines Zeitraums eine erste Schwelle erreicht; oder
eine Abweisungseinheit (60302), die so konfiguriert ist, dass sie den eingehenden Anruf abweist, wenn eine Zunahme des Abstands innerhalb eines Zeitraums eine zweite Schwelle erreicht; oder
eine Eingangsanrufhalteeinheit (60303), die so konfiguriert ist, dass sie einen Eingangsanrufzustand aufrechthält, wenn innerhalb eines Zeitraums eine Abnahme des Abstands unter einer ersten Schwelle liegt oder eine Zunahme des Abstands unter einer zweiten Schwelle liegt;
wobei die Abstandsbestimmungseinheit (602) eine Abstandmessvorrichtung umfasst, wobei die Abstandsmessvorrichtung so konfiguriert ist, dass sie bei Erkennung eines Gesichts im erfassten Bild den Abstand zwischen dem mobilen Endgerät und dem erkannten Gesicht misst, wobei die Abstandsmessvorrichtung eine Ultraschall-Abstandsmessvorrichtung oder eine Infrarot-Abstandsmessvorrichtung umfasst.

## Revendications

1. Procédé de traitement d'appel entrant, consistant :
lorsqu'un signal pour un appel entrant est reçu, à acquérir (S101) une image en utilisant un appareil de prise de vues prédéfini ;
chaque fois qu'une image est acquise, à effectuer (S102) une détection de visage humain sur l'image et à déterminer une variation d'une distance entre un terminal mobile et un visage humain détecté ; et
à effectuer (S103) un traitement correspondant sur l'appel entrant en fonction de la variation de la distance ;
dans lequel la réalisation (S103) d'un traitement correspondant sur l'appel entrant en fonction de la variation de la distance consiste :
à établir l'appel entrant si une diminution de la distance atteint un premier seuil pendant une période de temps ; ou
à refuser l'appel entrant si une augmentation de la distance atteint un second seuil pendant une période de temps ; ou
à garder un état d'appel entrant si une diminution de la distance est inférieure à un premier seuil ou si une augmentation de la distance est inférieure à un second seuil pendant une période de temps ;
dans lequel la détermination d'une variation d'une distance entre un terminal mobile et un visage humain détecté consiste :
lorsqu'un visage humain est détecté dans l'image acquise, à mesurer, au moyen d'un appareil de mesure de distance, la distance entre le terminal mobile et le visage humain détecté, dans lequel l'appareil de mesure de distance comprend un appareil de mesure de distance par ultrasons ou un appareil de mesure de distance infrarouge.

2. Terminal mobile comprenant :
une unité d'acquisition d'image (601), configurée : lorsqu'un signal pour un appel entrant est reçu, pour acquérir une image en utilisant un appareil de prise de vues prédéfini ;
une unité de détermination de distance (602), configurée : chaque fois qu'une image est acquise, pour effectuer une détection de visage humain sur l'image et pour déterminer une variation d'une distance entre le terminal mobile et un visage humain détecté ; et
une unité de traitement d'appel entrant (603), configurée pour effectuer un traitement correspondant sur l'appel entrant en fonction de la variation de la distance ;
dans lequel l'unité de traitement d'appel entrant (603) comprend :
une unité de connexion (60301), configurée pour établir l'appel entrant lorsqu'une diminution de la distance atteint un premier seuil pendant une période de temps ; ou
une unité de rejet (60302), configurée pour refuser l'appel entrant lorsqu'une augmentation de la distance atteint un second seuil pendant une période de temps ; ou
une unité de maintien d'appel entrant (60303), configurée pour garder un état d'appel entrant lorsqu'une diminution de la distance est inférieure à un premier seuil ou lorsqu'une augmentation de la distance est inférieure au second seuil pendant une période de temps ;
dans lequel l'unité de détermination de distance (602) comprend un appareil de mesure de distance, l'appareil de mesure de distance est configuré, lorsqu'un visage humain est détecté dans l'image acquise, pour mesurer la distance entre le terminal mobile et le visage humain détecté, dans lequel l'appareil de mesure de distance comprend un appareil de mesure de distance par ultrasons ou un appareil de mesure de distance infrarouge.
